# EUROPEAN PATENT SPECIFICATION

(11) **EP 3 908 085 B1**
(45) Date of publication and mention of the grant of the patent: **01.01.2025**
(21) Application number: 20173633.7
(22) Date of filing: 08.05.2020
(51) Int. Cl.: H05B 47/115

(54) **SYSTEM AND METHOD FOR CONTROLLING OCCUPANCY AT A PLURALITY OF WORKSTATIONS**
SYSTEM UND VERFAHREN ZUR STEUERUNG DER BELEGUNG AN EINER VIELZAHL VON ARBEITSSTATIONEN
SYSTÈME ET PROCÉDÉ DE CONTRÔLE DE L'OCCUPATION AU NIVEAU D'UNE PLURALITÉ DE POSTES DE TRAVAIL

(43) Date of publication of application: 10.11.2021
(73) Proprietor: Helvar Oy Ab, 02150 Espoo (FI)
(72) Inventor: Juslén, Henri, 02150 Espoo (FI); Ibrahim, Abdulla, 02150 Espoo (FI)
(74) Representative: Papula Oy

(56) References cited:
- EP-A1- 3 226 659
- EP-A1- 3 373 707
- EP-A1- 3 640 871
- WO-A1-2017/192806
- WO-A2-2006/124308
- US-A1- 2007 244 572
- US-A1- 2012 278 640
- US-A1- 2013 184 876
- US-A1- 2016 069 585

## Description

### FIELD OF THE INVENTION

The invention concerns the technical field of systems and methods that help users to navigate and operate in a work environment. In particular the invention concerns a system and method that can produce and distribute accurate information about the state of occupancy characteristic of a plurality of workstations.

### BACKGROUND OF THE INVENTION

Modern office spaces often have an arrangement where users have large freedom to select any of a plurality of workstations at any time. In this context a workstation does not mean a powerful tabletop computer but a dedicated location where a user may sit down (or stand, or even lie down, walk on a treadmill, or pedal an exercise bike etc.) for some time to work using a computer device. Typically, a workstation of this kind comprises at least a docking station for the user to plug in his or her laptop. Additionally or alternatively the workstation may comprise other location-specific electronic equipment such as a fixed display, a keypad, a phone charger, or others. In many offices the workstations may be located in a variety of dedicated spaces such as quiet rooms, teamwork rooms, and the like.

In large offices or ones with a number of isolated spaces a user coming in may find it problematic to know, where he or she could most easily find an available workstation. It is naturally possible to walk around, trying to find a workstation that is empty of the personal belongings of anyone else. However, in many cases there are workstations at which someone has left a jacket, a backpack, or other belongings, seemingly reserving that workstation for use, even if actually the person in question is currently somewhere else. There may be office rules about how and when the later user is allowed to occupy such a seemingly taken workstation, but in practice it is difficult to know whether the previous occupant is in a meeting that will last for two more hours or whether he or she is just visiting the toilet or getting a cup of coffee.

A prior art document US 2012/278640 discloses monitoring a space associated with a computer workstation and performing one or more power management functions in response to detected occupancy.

A prior art document EP 3 373 707 discloses a method and a device for making the presence of a user known to a lighting system.

A prior art document US 2016/0069585 discloses a control device that adjusts at least one property of the environment in a region within a structure based on presence information of any persons being present.

A prior art document EP 3 640 871 discloses a system and a method for automatic indication of contact center status using an illumination device.

A prior art document WO 2017/192806 discloses a system for automatic control of individual workstation luminaires and automatic control of workstation plug loads in response to the presence of one or more occupants.

A prior art document US 2013/184876 A1 considers managing power consumption in a used space that includes used devices and motion detectors.

A prior art document WO 2006/124308 A2 discloses automatic lighting control systems, devices, and methods that automatically control a light source in response to detected computer usage.

A prior art document US 2007/244572 A1 discloses an automation module configured to commence, maintain, and/or cease performing one or more automation actions in response to detecting user input, motion, proximity, other conditions, or any combination of one or more thereof.

### SUMMARY

It is an objective to present method and system for controlling occupancy at a plurality of workstations. Another objective is to ensure that the method and system are applicable in a variety of different kinds of environments, and provide accurate and up-to-date information about the availability of workstations. A further objective is that the method and system can be combined with other useful features and functionalities of office environments, providing synergistic advantages. A yet another objective is that the method and system are easy and straightforward to use and require little or no further dedicated action from the user to produce the occupancy information.

These and further advantageous objectives are achieved by using the lighting system of the office environment to wirelessly collect information about detected action at the workstations, and by providing the collected information to users in a suitable processed form.

According to an aspect there is provided a lighting control system for a workstation in accordance with claim 1.

According to an embodiment said workstation-specific lighting control device is an external module with a connector for connecting to said docking station at said workstation. This involves the advantage that a workstation with an ordinary docking station can be easily converted to operate according to the principle described here.

According to an embodiment said workstation-specific lighting control device is configured to transmit to said at least one luminaire maintenance packets during periods when said activity indications indicate detected continuous computer use at the workstation. This involves the advantage that the luminaire (s) can be kept constantly aware of the state of detected activity at the workstation, while also serving possible other needs of continuous communications and control.

According to an embodiment said workstation-specific lighting control device is configured to transmit to said at least one luminaire different kind of activity transmissions depending on whether said activity indications indicate only a connection of a computer device to the docking station or a connection and active use of said computer device. This involves the advantage that already the nature of the transmitted packets can be utilized for conveying information, which may help in saving bandwidth.

According to an embodiment said workstation-specific lighting control device is configured to transmit said activity transmissions in response to instructions it receives from a computer device connected to the docking station. This involves the advantage that the computer device can be given large influence regarding the nature and information content of the transmissions.

According to an embodiment said occupancy analyzer is configured to compile and transmit, as said occupancy information, workstation-specific occupancy indicators that reflect the occupancy of said workstation as concluded from said activity reports. This involves the advantage that a user looking for an available workstation may find one easily.

According to an embodiment the occupancy analyzer may be configured to collect and store history information indicative of past occupancy of said workstation; compare said activity reports to said history information; produce an occupancy estimate indicative of estimated future occupancy of said workstation at a later instant of time; and compile and transmit, as said occupancy information, information indicative of said occupancy estimate. This involves the advantage that the occupancy information may become more accurate as more history information is accumulated.

According to an embodiment said occupancy analyzer is configured to compile and transmit, as said occupancy information, an estimated state of occupancy of said workstation at said later instant of time. This involves the advantage that users may be informed of not only current but also future states of occupancy at workstations.

According to an embodiment the system comprises, as a part of said further electronic equipment at the respective workstation, a user interface device configured to display an availability indicator. Said availability indicator may comprise at least one of: an indicator of whether the workstation is available or not, based on previous activity indications received by the workstation-specific lighting control device; an indicator of a duration of time elapsed since the latest computer use has been detected at the workstation, based on previous activity indications received by the workstation-specific lighting control device; indicator of an estimated time after which the work-station is available, based on previous activity indications received by the workstation-specific lighting control device and on a predetermined availability rule. This involves the advantage that users present in the same space can be effectively informed about the state of availability of the workstation(s).

According to a second aspect there is provided a system for controlling occupancy at a plurality of workstations in accordance with claim 10.

According to an embodiment said workstation-specific lighting control devices are said docking stations provided at said workstations. This involves the advantage that the equipment seen by users at the workstations can be kept simple and straightforward.

According to an embodiment said workstation-specific lighting control devices are external modules connected to respective ones of said docking stations provided at said workstations. This involves the advantage that workstations with ordinary docking stations can be easily converted to operate according to the principle described here.

According to an embodiment said luminaires are configured to transmit said activity reports to said occupancy analyzer through at least one of: wireless mesh network where said luminaires are configured to act as nodes; lighting control network through which said luminaires are configured to exchange lighting control information with a centralized lighting controller. This involves the advantage that versatile and flexible ways for transmitting the activity reports can be provided.

According to an embodiment said occupancy analyzer is configured to compile and transmit, as said occupancy information, workstation-specific occupancy indicators that reflect the occupancy of said workstations as concluded from said activity reports. This involves the advantage that user may be given very accurate information about where they may find available workstations.

According to an embodiment said occupancy analyzer is configured to compile and transmit said workstation-specific occupancy indicators in the form of a two- or three-dimensional workstation occupancy map. This involves the advantage that there is a readily available and easy-to-use way of providing users with intuitive information about the availability situation of workstations.

According to an embodiment the occupancy analyzer is configured to collect and store history information indicative of past occupancy of said workstations; compare said activity reports to said history information; produce an occupancy estimate indicative of estimated future occupancy of at least some of said workstations at a later instant of time; and compile and transmit, as said occupancy information, information indicative of said occupancy estimate. This involves the advantage that users can be given predictive information about how and where they may find available workstations at a later instant of time.

According to an embodiment said occupancy analyzer is configured to compile and transmit, as said occupancy information, an estimated state of occupancy of at least one of said workstations at said later instant of time. This involves the advantage that users are better able to plan their future actions where they need the workstations.

According to an embodiment said occupancy analyzer is configured to compile and transmit, as said occupancy information, a rush alert indicative of an estimated full occupancy of a significant majority of said workstations. This involves the advantage that users may plan their next actions depending on whether they can expect to find an available workstation.

According to an embodiment said occupancy analyzer is configured to compile and transmit, as said occupancy information, behavior instructions indicating desired behavior of current and/or possible future users of said workstations. This involves the advantage that the overall use of the workstations can be made more effective.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**Figure 1** illustrates a workstation,
**figure 2** illustrates a system with information flows,
**figure 3** illustrates a system with information flows,
**figure 4** illustrates a docking system,
**figure 5** illustrates a lighting control dongle in a docking system,
**figure 6** illustrates an office environment,
**figure 7** illustrates a user device and a user interface,
**figure 8** illustrates a user device and a user interface,
**figure 9** illustrates the displaying of occupancy states at workstations, and
**figure 10** illustrates a system and a method.

### DETAILED DESCRIPTION

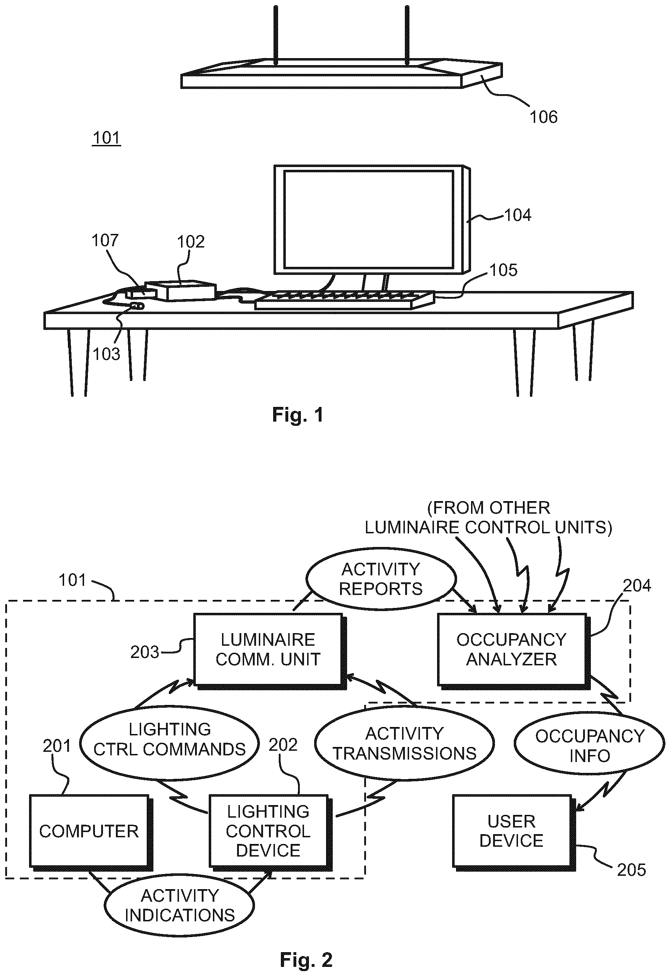

Fig. 1 illustrates an example of a workstation 101. In order to offer users the possibility to work at the workstation 101 with their own computer device, a docking station 102 is provided at the workstation. The docking station 102 can be used to connect the computer device of the user to further electronic equipment at the workstation. In the example of fig. 1 the docking station 102 is of the kind to which a connection is made by sticking a connector 103 to a corresponding receptacle in the computer device of the user. This example is not limiting, as the docking station may be e.g. of the kind designed as a platform, onto which the user places his or her computer device so that the necessary connections are automatically made between connector means in the platform and in the computer device. Further examples of docking stations include but are not limited to very short distance wireless connections, where very short distance means a distance so short that the computer device of the user can only be located strictly within a certain workstation. In other words, the very short distance meant here does not cover e.g. general-purpose WiFi implementations in which a single WiFi base station may communicate simultaneously with even all computer devices in a room, for example.

Examples of further electronic equipment at the workstation 101 include but are not limited to a display 104 and a keyboard 105. Other examples of comparable further electronic equipment might include e.g. a mouse, a digitizer pad or other specialized input device, headphones, loudspeakers, camera, and the like.

At least one luminaire 106 is provided and configured to illuminate the workstation 101. In this example the luminaire 106 is a pendant luminaire that hangs above the workstation 101. Additionally or alternatively, the one or more luminaires that are configured to illuminate the workstation 101 could include for example one or more desk lamps, one or more recessed luminaires in walls and/or the ceiling, one or more pieces of LED strips embedded in structures or attached thereto, and the like. Being configured to illuminate the workstation 101 means that the light emitted from the one or more luminaires in question falls mostly on surfaces that are part of the workstation 101 so that a person working at the workstation 101 would significantly benefit from such light while said light would be less significant to any other users working at other workstations.

A lighting control device 107 is provided at the workstation 101 and configured to communicate lighting control commands to the luminaire 106, or - in case there are a plurality of dedicated luminaires at the workstation - to the respective luminaires. In particular, the lighting control device 107 is configured to communicate lighting control commands to the at least one luminaire 106 at least during periods when a computer device of a user is locally coupled to the lighting control device 107 at the workstation 101. At a configuration stage, when the lighting control device 107 was taught to communicate the lighting control commands to the right luminaire(s), also location information may have been collected about where in the illuminated environment this workstation is located. Examples of ways in which the computer device of a user may be locally coupled to the lighting control device 107 at the workstation 101 are described in more detail later in this text.

The lighting control device 107 is a device configured for operation as a docking station or, as in fig. 1, for operation in connection with a docking station 102 at the workstation 101. The lighting control device 107 is configured to detect activity indications indicative of computer use at the workstation 101 and to transmit activity transmissions to the at least one luminaire 106. This takes place during those periods when a computer device of a user is locally coupled to the lighting control device 107 at the workstation 101. The last-mentioned requirement is understandable, because if there is no computer device of the user locally coupled to the lighting control device 107 there can hardly be any detectable computer use at the workstation 101 either. The activity transmissions are indicative of the extent to which the computer device of the user is used according to the activity indications that the lighting control device 107 has detected.

The flows of information are illustrated in more detail in fig. 2. In the exemplary lighting control system of fig. 2 at least those parts inside the dashed polygon are located at the workstation 101. A computer device of a user is illustrated as the computer 201. The lighting control device 202 is configured to detect activity indications indicative of the extent to which the computer 201 is used at the workstation 101.

The part of the workstation-specific luminaire (or, if there are more than one, the workstation-specific luminaires in plural) that is capable of communicating with the lighting control device 202 is shown as a luminaire communications unit 203 in fig. 2. The lighting control device 202 is configured to transmit to the luminaire communications unit 203 both lighting control commands and activity transmissions. The purpose of the lighting control commands is to make the at least one workstation-specific luminaire to emit light in amounts and other characteristics that suit the needs of the user. In this respect the system may operate for example in the same way that is described in detail in the previous patent application published as EP3226659 A1. In a simpler embodiment the lighting control device 202 may offer e.g. a simple user interface with "dim up" and "dim down" buttons, so that the user may press any of these to control the amount of light emitted by the at least one luminaire.

The purpose of the activity transmissions is to convey to the luminaire communications unit 203 information about the extent to which the computer 201 of the user is used or has been most recently used. Due to natural delays in communications, the activity transmissions are never quite current - down to fractions of a second - but represent some characterization of how actively the user has been using his or her computer 201. In order to suit the purposes of the present description, it may be sufficient if the activity transmissions convey to the luminaire communications unit 203 information about how actively the user has been using the computer 201 during the last seconds, or some dozens of seconds, or during the last minute, or during the last few minutes.

Active use of the computer 201 means here a course of events in which the user performs some man-machine interaction with his or her computer. It may comprise for example moving a mouse, writing on a keyboard, making touches on a touch-sensitive screen, listening to audio, watching a video, or the like. The active use of the computer 201 may also mean events like locking the screen - or otherwise putting the computer into protected mode - as a sign of leaving the workstation for some duration of time. Such locking may take place manually or automatically. The extent to which the computer 201 of the user is used means essentially whether such active use of the computer has occurred very recently, within a time frame of some exemplary magnitude as described above. In short, the activity transmissions should convey to the luminaire communications unit 203 information about whether the user is currently doing (or has very recently done) something for which he or she actually needs the workstation 101; in other words, whether he or she is present and working or whether he or she is absent from the workstation 101 or at most just passively sitting there.

The information conveyed by the activity transmissions may be qualitive or quantitative, or both. Quantitative information means here information about how much activity the user has shown at his or her computer, while qualitive information means just telling that such activity has occurred, without taking any position regarding its amount or nature. In one embodiment the workstation-specific lighting control device 202 is configured to transmit to the luminaire communications unit 203 just maintenance packets during periods when the activity indications indicate detected continuous computer use at the workstation. A maintenance packet may be classified as qualitative information, as it is merely a confirmation that yes, the user is still present and using the computer.

According to an embodiment, the workstation-specific lighting control device 202 may be configured to transmit to the luminaire communications unit 203 different kind of activity transmissions depending on whether the activity indications indicate only a connection of a computer device to the docking station or a connection and active use of the computer device. If only a connection of a computer has been found without active use of the computer, the user may be absent or at least he or she does not currently seem to need the workstation very much. Activity transmissions that the lighting control device 202 would make in such a case would most definitely have the nature of maintenance packets, because not very much more can be announced than a detected connection. The activity transmissions made during detected active use of the computer may be maintenance packets or they may contain quantitative information about the level of active computer use detected.

The communications between the lighting control device 202 and the luminaire communications unit 203 may be arranged so that some kind of maintenance packets are transmitted there anyway whenever both devices are capable of active communications, regardless of whether there is a detected connection to the computer of the user. The maintenance packets may also be called keepalive packets, because they "keep alive" the communications connection between the two devices. Events such as detecting a connection to the computer of the user, receiving activity indications that indicate active use of the computer, not receiving any more such activity indications, losing a previous connection to the computer of a user, and the like may trigger changes in the type of maintenance packets that are transmitted. That is, at least a part of the information content of the activity transmissions may reside in the type of these transmissions, rather than in any explicit payload information included in these transmissions.

The luminaire communications unit 203 may be comprised in a luminaire, or it may be an external device located close to and arranged to cooperate with the luminaire. If there are more than one luminaire illuminating the workstation 101, they may all have their own luminaire communications units 203 or at least two of them may share a common luminaire communications unit 203. In the embodiment of fig. 2 the lighting control system at the workstation 101 comprises also an occupancy analyzer 204, which is configured to receive activity reports from the one or more luminaire communications units 203. Additionally the occupancy analyzer 204 is configured to compile and transmit occupancy information to one or more user devices 205. The occupancy information is based on at least the activity reports. The occupancy information is indicative of the availability of the workstation 101.

The graphical way of representing the flows of information in fig. 2 has been selected as an example, indicating that the activity indications and at least some of the activity reports may go through wired connections while the lighting control commands, activity transmissions, occupancy information, and possibly some of the activity reports may go through wireless connections. This is not an exclusive limitation, and other forms of communications can be used.

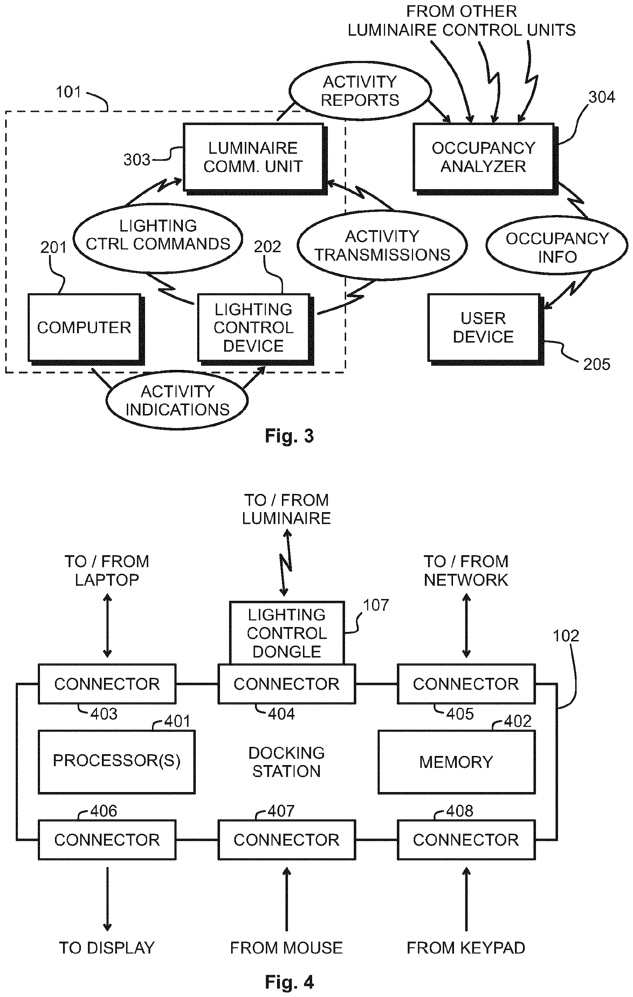

Fig. 3 illustrates an example of flows of information in a system that may be meant for controlling occupancy at a plurality of workstations. Only one workstation 101 is shown in fig. 3 as an example, so if there are many, the functional blocks shown as parts of the workstation 101 in fig. 3 must be considered in plural, occurring at all said workstations or at least at a large number of workstations.

The system considered in fig. 3 comprises a plurality of workstation-specific lighting control devices 202, each configured to detect respective activity indications indicative of the use of a computer 201 at a respective one of said plurality of workstations. The system of fig. 3 comprises also a plurality of luminaires, each configured to illuminate at least one of said workstations. The luminaires are also configured to receive activity transmissions from at least one of said lighting control devices. As in fig. 2, the activity transmissions are indicative of activity indications detected by the respective lighting control devices. The luminaire communications unit 303 in fig. 3 represents the plurality of luminaire communications units that may be included in said luminaires or located close to and arranged to cooperate with the respective luminaires. For keeping the expressions concise it is advantageous to speak about communicating with the luminaires, while in practice this may mean communicating with the luminaire communications units of the luminaires.

The system of fig. 3 comprises an occupancy analyzer 304, which is configured to receive activity reports from said plurality of luminaires. The occupancy analyzer 304 is also configured to compile and transmit occupancy information to one or more user devices 205. Such occupancy information is based on at least said activity reports and said occupancy information being indicative of availability of said plurality of workstations.

The division into blocks is functional in fig. 3 and does not need to reflect the actual division into physical devices. As an example, one of the luminaire communications units 303 may also act as the occupancy analyzer 304. Alternatively, the occupancy analyzer 304 may be a separate, purpose-built device, or it may exist as a functionality distributed between a number of computer devices such as a computing cloud.

As in fig. 2, the plurality of lighting control devices 202 are devices configured for operation as, or in connection with, docking stations provided at said workstations 101 for connecting a computer device 201 to further electronic equipment at the respective workstation.

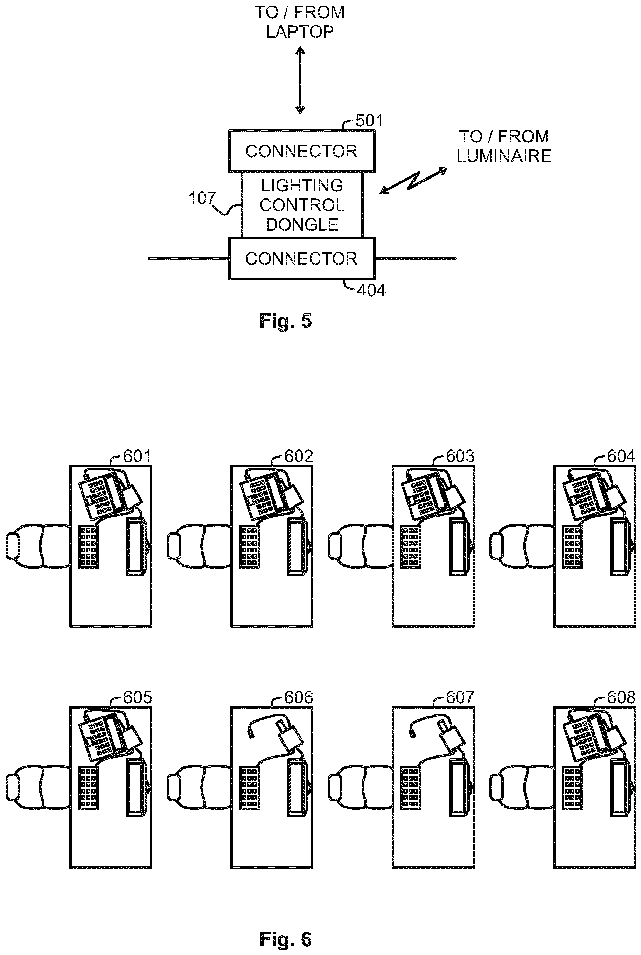

Before going to examples of occupancy information that may be used in the system of fig. 2 or in that of fig. 3, some examples of practical implementation of a workstation-specific lighting control device are described with reference to figs. 4 and 5.

Fig. 4 illustrates a docking station 102, comparable to the docking station 102 of fig. 1. The docking station 102 comprises one or more processors 401 and one or more memories 402 that may be used at least to store executable programs for the one or more processors 401 and run-time data created during their operation. The docking station 102 comprises a number of connectors 403 to 408 for making connections with various electronic devices at the workstation. As examples, connector 403 is used for making a connection to the user's computer device; connector 405 is used for making a connection to an external wired network; connector 406 is used for making a connection to a display; connector 407 is used for making a connection to a mouse; and connector 408 is used for making a connection to a keypad.

Connector 404 is used for making a connection to a workstation-specific lighting control device 107, which in this example embodiment is an external module connected to the docking station 102 at the workstation. The connector 404 may be any kind of a suitable connector, like a USB connector for example. The lighting control device 107 is called a lighting control dongle in fig. 4, because it may have for example the appearance of a dongle similar to USB flash memory modules. The lighting control device 107 may be considered to perform a monitoring activity: it monitors the use of a computer at the workstation. The lighting control device 107 comprises the appropriate communications means for communicating with the docking station 102 through the connector 404 and for communicating with the workstation-specific luminaire. In fig. 4 wireless communications are assumed to be used for the latter purpose.

Fig. 5 illustrates an alternative embodiment of a workstation-specific lighting control device 107. In this case the lighting control device 107 appears as an external module like in fig. 4, but in this case it is an "intermediate" module in the sense that a cable from the user's computer device goes to a connector 501 in the lighting control device 107, and the lighting control device 107 goes to a corresponding connector 404 in the docking station. Thus all wired communications between the user's computer device and the docking station go through the lighting control device 107 in fig. 5.

In the embodiment of fig. 5 it is particularly easy for the lighting control device 107 to detect activity indications: it is sufficient for it to note that active transfer of information is going on through it. In the embodiment of fig. 4 the processor 401 of the docking station 102 may be programmed to inform the lighting control device 107 regularly of similar active transfer of information between the docking station 102 and the user's computer device. Additionally or alternatively, in all embodiments it is possible that the lighting control device may be configured to transmit its activity transmissions in response to instructions it receives from a computer device connected to the docking station. In other words, in the last-mentioned case an application program may have been installed in the computer device of the user that makes it detect a lighting control device present at the docking station and send activity indications to such a detected lighting control device. All in all, providing the lighting control device with activity indications may be arranged in a similar fashion as is used for arranging communications between a user's computer device and the further electronic equipment normally present at the workstation and connected to the same docking station with the user's computer device.

Examples of the operation of the occupancy analyzer are described next with reference to fig. 6 and others. Fig. 6 illustrates an office environment with eight workstations 601 to 608 seen from above. At workstations 601, 602, 603, 604, 605, and 608 a computer device of a respective user is connected to the respective docking station provided at the workstation. For possible other users it would be valuable to know, possibly already in beforehand before they actually come walking around in the office, that workstations 606 and 607 are free. Additionally, other users may be interested to know, whether the workstations 601, 602, 603, 604, 605, and 608 are really taken or whether they (or at least some of them) are inactive and have been that way for a time long enough to be considered available according to office rules.

We may assume that each workstation 601 to 608 is equipped like in fig. 1. In other words, at each workstation a workstation-specific lighting control device is provided and configured to detect respective activity indications indicative of computer use at that particular workstation. What is not shown in fig. 6 but is assumed to exist are a plurality of luminaires, each configured to illuminate one of the workstations 601 to 608 so that they may be called workstation-specific luminaires. They are also configured to receive activity transmissions from the respective workstation-specific lighting control devices. The activity transmissions are indicative of activity indications detected by the respective lighting control device.

We may also assume that there is an occupancy analyzer, which is configured to receive activity reports from said workstation-specific luminaires. The luminaires may be configured to transmit their activity reports to the occupancy analyzer through a wireless mesh network for example, in which wireless mesh network the luminaires are configured to act as nodes. Additionally or alternatively, the activity reports may be transmitted through lighting control network through which the luminaires are configured to exchange lighting control information with a centralized lighting controller.

The occupancy analyzer is also configured to compile and transmit occupancy information to one or more user devices. The occupancy information is based on at least said activity reports and is indicative of availability of the workstations 601 to 608.

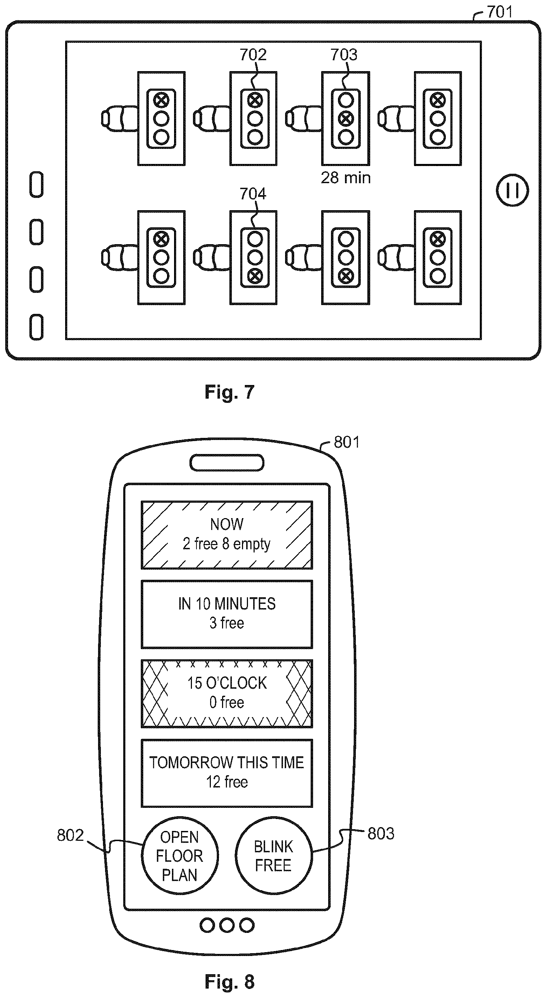

Fig. 7 illustrates an example of a user device 701 that has received occupancy information from the occupancy analyzer. The user device 701 is a tablet computer, and it may have received the occupancy information through any communications channel that is available for communications between computer devices such as the occupancy analyzer and the user device 701. Said communications channel may involve e.g. transmissions over a WiFi network, if both the occupancy analyzer and the user device 701 are within the coverage area of one. Additionally or alternatively, the communications channel may involve transmissions over other kinds of communications networks, such as one or more mobile data networks.

The occupancy analyzer may be configured to compile and transmit workstation-specific occupancy indicators as the occupancy information. A workstation-specific occupancy indicator is a piece of information that reflects the occupancy of the respective workstation as concluded from the activity reports that the occupancy analyzer has received. In communications between computer devices, workstation-specific occupancy indicators may be transmitted in any kind of encoded form that is most suitable for handling by programmable devices. In an advantageous embodiment a user device that has received such workstation-specific occupancy indicators can use them to present corresponding occupancy indicators to the user in a form that is easy and intuitive for a human to read.

In fig. 7 the user device 701 is programmed to present workstation-specific occupancy indicators to the user in graphical form. There is for example one displayed workstation-specific occupancy indicator 702 that indicates the availability of workstation 602 in the office environment shown in fig. 6. Here it is assumed that the activity reports from the luminaire specific to workstation 602 have indicated continuous computer use at said workstation. Consequently, the displayed workstation-specific occupancy indicator 702 is a red traffic light, telling the user that workstation 602 is occupied.

Here it is also assumed that the activity reports from the luminaire specific to workstation 603 have indicated that no computer use has been detected at said workstation for 28 minutes. Consequently, the displayed workstation-specific occupancy indicator 703 is a yellow traffic light, telling the user that workstation 603 might actually be available or it may become available soon: office rules may say for example that a workstation that has been unused for 30 minutes becomes automatically available to others, irrespective of whether the previous user has left some personal belongings there. The user device 701 of fig. 7 is also programmed to indicate the time for which the corresponding workstation has not seen active use.

Here it is further assumed that the activity reports from the luminaire specific to workstation 606 have indicated that no computer use has been detected at said workstation at all, or at least not within some predetermined time frame like the last 30 minutes for example. Consequently, the displayed workstation-specific occupancy indicator 704 is a green traffic light, telling the user that workstation 606 is currently available.

In fig. 7 the user device 701 displays the workstation-specific occupancy indicators in the form of a two-dimensional map. They could also be displayed in other forms, like in the form of a three-dimensional map or in the form of a table. The responsibility for processing the presentation forms can be divided between the occupancy analyzer and the user device in many ways, depending on factors like the processing capabilities of the corresponding processing devices and the bandwidth available for transmitting the occupancy information from the occupancy analyzer to the user device(s).

As displaying the occupancy indicators in the form of a two- or three-dimensional map requires knowledge about the relative physical locations of the workstations, it may be advantageous to have the occupancy analyzer to compile and transmit the workstation-specific occupancy indicators in the form of a two- or three-dimensional workstation occupancy map to the user device(s). This way e.g. possible changes in the relative physical locations of the workstations only had to be taken into account in configuring the occupancy analyzer, and the user device(s) would just obediently display any map they receive from the occupancy analyzer to the respective user(s).

The designation "user device" does not mean that the device in question should be personal to any single user. A user device like the one 701 in fig. 7 may be located for example in a lobby or otherwise close to the entrance of an office or other indoor space with workstations. This way all incoming users may easily check the current availability situation of the workstations, and make their way towards that or those workstations that are free or at least possibly becoming free in the nearest future.

Fig. 8 illustrates another example of a user device 801, which in this case is a smartphone. The user device 801 is configured to receive occupancy information from an occupancy analyzer (not shown) and to display corresponding occupancy information to the user in the form of a summary. The particular form of a summary shown in fig. 8 summarized not only the current availability situation (2 workstations free, 8 workstations empty i.e. apparently taken but with not detected computer use) but also predicted availability situation in 10 minutes (3 workstations free), at a later time instant (15 o'clock, 0 workstations free), and the same time next day (12 workstations free). The user device 801 also offers a touch-sensitive key 802 to switch to the floor plan view, and another touch-sensitive key 803 to make the luminaires blink above those workstations that have been found to be free.

The information that forms the basis of the predicted availability situation comes most advantageously from the occupancy analyzer. The occupancy analyzer may be configured to collect and store history information indicative of past occupancy of the workstations. The history information may reveal frequently occurring behavioral patterns, for example so that those workstations that are located near the windows with nicest views each tend to be occupied for at least 3.5 hours in one go, while other workstations in the room are seldom occupied for more than 2 hours. Or that someone seems to come to work early in the morning each Monday, Tuesday, and Thursday; always go to the same workstation closest to the coffee machine; and leave exactly at 15 o'clock. It may be possible for the occupancy analyzer to derive numerous other kinds of behavioral patterns from a database of collected history information.

The occupancy analyzer may be configured to compare the most recent activity reports from the luminaires to the history information, and to produce an occupancy estimate indicative of estimated future occupancy of at least some of the workstations at a later instant of time. Taken the examples above, in a situation where all workstations are taken but 2 of those far from the windows have been in continuous use for more than 1.5 hours, the occupancy estimate may indicate that these two workstations may become available in less than 30 minutes. Or, if it is Thursday, the workstation closest to the coffee machine has been taken since early morning, but the time is already 14:50, the occupancy estimate may indicate that the workstation closest to the coffee machine may become available in 10 minutes. Depending on the behavioral patterns that have been detected in the history information, it may be possible for the occupancy analyzer to produce numerous other kinds of occupancy estimates on the basis of said comparing.

If the occupancy analyzer is capable of producing occupancy estimates, it may be configured to compile and transmit, as occupancy information, an estimated state of occupancy of at least one of the workstations at some later instant of time. If the user device is of the kind shown in fig. 7 for example, the estimated state of occupancy of any of the workstations may be displayed for example as an additional symbol or as a particular kind of traffic light, like one with red and yellow lights simultaneously on (resembling the real-life traffic lights of some countries where red and yellow light up simultaneously for a moment before the light turns green). If the user device is of the kind shown in fig. 8, the estimated state of occupancy of any of the workstations may be included in any of the prediction summaries, like the one that indicates three free workstations in 10 minutes. Numerous other ways of displaying the estimated state of occupancy of workstations to users can be presented.

Additionally or alternatively, if the occupancy analyzer is capable of producing occupancy estimates, it may be configured to compile and transmit, as occupancy information, a rush alert. A rush alert is a piece of information that indicates an estimated full occupancy of all or at least a significant majority of all workstations. Rush alerts may offer users important assistance in deciding whether they should come to the office to work or whether they should work from home instead. The number of workstations in an office may have been deliberately selected smaller than the total number of employees, based on an assumption that a certain percentage of employees will be working from home, travelling, or otherwise absent from the office at any given time anyway. In such a situation an employee may become frustrated if he or she commutes for an hour to the office only to find that all workstations are taken even if a number of them were available at the time when the employee left home. An occupancy analyzer capable of producing occupancy estimates may find, by comparing the most recent activity reports from luminaires to history information, that all workstations are very likely to become taken in something like 50 minutes. It may then transmit to the user device(s) a rush alert, essentially telling that if the user cannot make it to the office within the next 50 minutes, it is better to stay home or go to a café or library to work instead.

The occupancy analyzer may also be configured to compile and transmit, as occupancy information, behavior instructions indicating desired behavior of current and/or possible future users of the workstations. For example, if the proportion of available workstations seems to fall below a certain threshold, the occupancy analyzer may transmit a message to all users, reminding them to collect their belongings from those workstations that they are not currently using. Behavior instructions may also be combined with rush alerts, so that in addition to just informing the user of the predicted full occupancy the occupancy analyzer may openly instruct the user not to come to the office for the time being.

If the occupancy analyzer has some means of recognizing which user is (or has been) using which workstation, the behavior instructions may be more accurately directed user-wise, for example so that a user who has been found to leave a workstation unused but preoccupied by his or her belongings may be reminded to collect those belongings in order to clearly vacate the workstation in question. The means for associating users with workstations may comprise for example an indoor positioning system built into the user devices of the users, so that the occupancy analyzer may associate a user with a workstation by comparing a position announced by the user device to the known positions of the workstations. Additionally or alternatively, the user devices may be configured to locally communicate with the workstation-specific luminaires in the same way as the workstation-specific lighting control devices, so that the occupancy analyzer may receive the user device - workstation associations in the activity reports it receives from the luminaires.

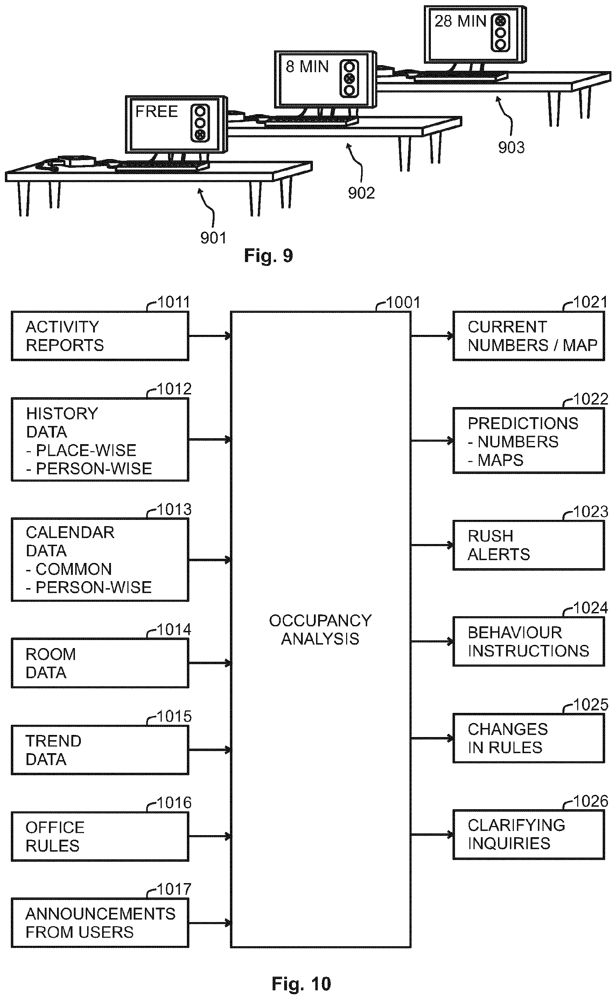

In addition to (or even instead of) the user devices, also the further electronic equipment at the workstations may be utilized to convey availability information to users. Fig. 9 illustrates an example in which each workstation is equipped with a lighting control system. The further electronic equipment at the workstation comprises a user interface device, here a display, which is configured to display an availability indicator.

The availability indicator may comprise for example an indicator of whether the workstation is available or not, based on previous activity indications received by the workstation-specific lighting control device. In the example of fig. 9, the first workstation 901 is available, as indicated by the green traffic light displayed on its display. The second workstation 902 is about to become available, as indicated by the yellow traffic light displayed on its display. The third workstation 903 is taken, as indicated by the red traffic light displayed on its display.

Alternatively or additionally, the availability indicator may comprise for example an indicator of a duration of time elapsed since the latest computer use has been detected at the workstation, based on previous activity indications received by the workstation-specific lighting control device. Additionally or alternatively, the availability indicator may comprise an indicator of an estimated time after which the workstation is available, based on previous activity indications received by the workstation-specific lighting control device and on a predetermined availability rule. In fig. 9 the predetermined availability rule says that a workstation becomes available after 30 minutes of no detected active use. The second workstation 902 has been unused for 22 minutes, so it displays an additional availability indicator "8 MIN" telling that the yellow traffic light will change to green in 8 minutes.

Fig. 10 illustrates an example of an occupancy analysis 1001 that an occupancy analyzer may perform. Listed on the left are possible inputs to the occupancy analysis 1001, and listed on the right are possible outputs of the occupancy analysis 1001.

Activity reports 1011 come from the luminaires and indicate detected activity at the respective workstations. The activity reports 1011 are based on activity transmissions that the luminaires have received from the respective workstation-specific lighting control devices. They may also contain additional information, like sensor outputs from motion sensors included in the luminaires, or user identifiers resulting from the identification of users based on local communications with the user devices of the users.

History data 1012 come from previous activity reports, so it may be stored information e.g. in the occupancy analyzer itself, in a computing cloud, or in some other information storage. Examples of history data include but are not limited to place-wise history data, which tells what kind of activity has been reported from each workstation in the past, and person-wise history data, which tells what kind of behavioral patterns individual persons have been found to follow.

Calendar data 1013 include common general calendar data like time and day as well as data about public holidays. It may also comprise data read from personal calendars of users, or at least some summary data about how full the calendars of users seem to be of events that are scheduled to be held at the office. The last-mentioned may be of assistance in predicting, how many of the users will come to the office during any given day, and at what time. Person-wise calendar data may comprise even data about whether a certain person is scheduled for a meeting in a meeting room, indicating that he or she will probably not need any of the workstations in the open office space for that duration. Combined with user identification at the workstations this information may be of assistance in determining the actual availability of a workstation that previously was reserved for that user.

Room data 1014 include the information about physical locations and the number and location of workstations in each room. This information is needed at least if and when the occupancy information will be distributed to user devices in the form of two- or three-dimensional workstation occupancy maps.

Trend data 1015 may include preliminary analysis results derived from the activity reports so far. For example, trend data 1015 may indicate the rate at which the office is currently filling up. In making predictions about workstation availability in the nearest future it may be important to know, whether the current proportion of reserved workstations accumulated steadily during the last two hours or whether everyone came in during the last 10 minutes, for example.

Office rules 1016 may comprise many kinds of given data that set the scene for indicating availability of workstations. Previously in this text time-based rules were already described, like ones that define a workstation as available if it hasn't been actively used for 30 minutes. Office rules may also comprise information about e.g. the different purpose of workstations: some of them may be located in a silent room, and of particular interest to users who currently need a workstation for deeply concentrated work.

As yet further kind of input, announcements from users 1017 are shown. The occupancy analysis 1001 may receive direct announcements from users, for example saying that a particular workstation is free immediately so that the occupancy analyzer does not need to wait for a 30 minutes period of no detected activity to mark it free.

Current numbers and occupancy maps 1021 are shown as an example of an output from the occupancy analysis 1001. This may mean occupancy indicators of the kind already described above, for example indicators of how many workstations there are currently available and where they are in the office.

Predictions 1022 are shown as another example of an output from the occupancy analysis 1001. This may mean indications of predicted occupancy of the kind already described above, for example indicators of how many workstations there will probably be available at some future instant of time and where they will probably be located.

Rush alerts 1023 are shown as another example of an output from the occupancy analysis 1001. This may mean messages to users like described above, informing the users about predicted times of limited availability of free workstations.

Behavior instructions 1024 are shown as another example of an output from the occupancy analysis 1001. This may mean instructions to be sent to individual user and/or to groups of users, telling them to behave in some particular way that takes into account the current availability situation of workstations.

Changes in rules 1025 are shown as another example of an output from the occupancy analysis 1001. This kind of changes may come about for example if the occupancy analysis is an intelligent self-learning process, which shortens or lengthens the time after which a non-used workstation is declared available according to how large a proportion of the workstations seems to be in use at each time of the day.

Clarifying inquiries 1026 are shown as another example of an output from the occupancy analysis 1001. This may mean messages that the occupancy analysis 1001 sends to individual users, asking them to indicate whether they actually need the workstation that seems to be reserved for them. An announcement from a user, as illustrated in 1017, may come as the user's response to such an inquiry.

It is obvious to a person skilled in the art that with the advancement of technology, the basic idea of the invention may be implemented in various ways. The invention is defined by the appended claims.

## Claims

1. A lighting control system for a workstation (101), comprising:
- at least one luminaire (106) configured to illuminate said workstation (101), and
- a workstation-specific lighting control device (202) specific to said workstation (101), the workstation-specific lighting control device (202) being configured to communicate lighting control commands to said at least one luminaire (106) during periods when a computer device (201) of a user is locally coupled to said lighting control device (202) at said workstation (101);
wherein said workstation-specific lighting control device (202) is a device configured for operation as, or connectable to, a docking station (102) provided at said workstation (101) for connecting said computer device (201) of the user to further electronic equipment (104, 105) at the respective workstation (101), **characterized in that** the workstation-specific lighting control device (202) is configured to detect activity indications indicative of computer use at said workstation (101) and to transmit activity transmissions to said at least one luminaire (106) during said periods, said activity transmissions being indicative of an extent to which said computer device (201) of the user is used according to said activity indications,
wherein said at least one luminaire (106) comprises one or more respective luminaire communications units (203, 303) configured to receive said activity transmissions from said workstation-specific lighting control device (202),
and wherein the lighting control system further comprises an occupancy analyzer (204, 304), configured to receive, from said one or more respective luminaire communication units (203, 303), activity reports (1011), based on said activity transmissions that the at least one luminaire (106) has received from the workstation-specific lighting control device (202), the occupancy analyzer (204, 304) being also configured to compile and transmit occupancy information to one or more user devices (205), said occupancy information being based on at least said activity reports (1011) and said occupancy information being indicative of availability of the workstation.

2. A lighting control system according to claim 1, wherein said workstation-specific lighting control device (202) is an external module (107) with a connector for connecting to said docking station (102) at said workstation (101).

3. A lighting control system according to any of claims 1 or 2, wherein said workstation-specific lighting control device (202) is configured to transmit to said at least one luminaire (106) maintenance packets during periods when said activity indications indicate detected continuous computer use at the workstation (101).

4. A lighting control system according to any of claims 1 to 3, wherein said workstation-specific lighting control device (202) is configured to transmit to said at least one luminaire (106) different kind of activity transmissions depending on whether said activity indications indicate only a connection of the computer device (201) to the docking station (102) or a connection and active use of said computer device (201).

5. A lighting control system according to any of claims 1 to 4, wherein said workstation-specific lighting control device (202) is configured to transmit said activity transmissions in response to instructions it receives from the computer device (201) connected to the docking station (102).

6. A lighting control system according to any of the preceding claims, wherein:
- said occupancy analyzer (204, 304) is configured to compile and transmit, as said occupancy information to said one or more user devices (205), workstation-specific occupancy indicators that reflect the occupancy of said workstation (101) as concluded from said activity reports (1011).

7. A lighting control system according to any of the preceding claims, wherein the occupancy analyzer (204, 304) is configured to:
- collect and store history information (1012) indicative of past occupancy of said workstation (101),
- compare said activity reports (1011) to said history information (1012),
- produce an occupancy estimate (1022) indicative of estimated future occupancy of said workstation (101) at a later instant of time, and
- compile and transmit, as said occupancy information to said one or more user devices (205), information indicative of said occupancy estimate (1022).

8. A lighting control system according to claim 7, wherein said occupancy analyzer (204, 304) is configured to compile and transmit, as said information indicative of said occupancy estimate (1022) to said one or more user devices (205) , an estimated state of occupancy of said workstation (101) at said later instant of time.

9. A lighting control system according to any of the preceding claims, further comprising said further electronic equipment (104, 105) at the respective workstation (101), wherein said further electronic equipment (104, 105) comprises a user interface device (104) configured to display an availability indicator, wherein said availability indicator comprises at least one of:
- indicator of whether the workstation (101) is available or not, based on previous activity indications received by the workstation-specific lighting control device (202),
- indicator of a duration of time elapsed since the latest computer use has been detected at the workstation (101), based on previous activity indications received by the workstation-specific lighting control device (202),
- indicator of an estimated time after which the workstation (101) is available, based on previous activity indications received by the workstation-specific lighting control device (202) and on a predetermined availability rule (1016).

10. A system for determining occupancy at a plurality of workstations (101, 601, 602, 603, 604, 605, 606, 607, 608, 901, 902, 903), comprising:
- a plurality of workstation-specific lighting control devices (202)
- a plurality of luminaires (106), each configured to illuminate at least one of said workstations (101, 601, 602, 603, 604, 605, 606, 607, 608, 901, 902, 903), wherein said plurality of workstation-specific lighting control devices (202) are devices configured for operation as, or connectable to, docking stations (102) provided at said plurality of workstations (101, 601, 602, 603, 604, 605, 606, 607, 608, 901, 902, 903) for connecting a computer device (201) to further electronic equipment (104, 105) at the respective workstation (101, 601, 602, 603, 604, 605, 606, 607, 608, 901, 902, 903), **characterized in that**:
each of the plurality of workstation-specific lighting control devices (202) is configured to detect respective activity indications indicative of use of the computer device (201) at a respective one of said plurality of workstations (101, 601, 602, 603, 604, 605, 606, 607, 608, 901, 902, 903),
each of the plurality of luminaires (106) is also configured to receive activity transmissions from at least one of said workstation-specific lighting control devices (202), said activity transmissions being indicative of said activity indications detected by the respective workstation-specific lighting control devices (202),
the system further comprising: an occupancy analyzer (204, 304), configured to receive, from said plurality of luminaires (106), activity reports (1011), based on said activity transmissions that the plurality of luminaires have received from the respective workstation-specific lighting control devices (202), the occupancy analyzer (204, 304) being also configured to compile and transmit occupancy information to one or more user devices (205), said occupancy information being based on at least said activity reports (1011) and said occupancy information being indicative of availability of said plurality of workstations (101, 601, 602, 603, 604, 605, 606, 607, 608, 901, 902, 903).

11. A system according to claim 10, wherein said workstation-specific lighting control devices (202) are said docking stations (102) provided at said workstations.

12. A system according to claim 10, wherein said workstation-specific lighting control devices (202) are external modules (107) connected to respective ones of said docking stations (102) provided at said workstations (101, 601, 602, 603, 604, 605, 606, 607, 608, 901, 902, 903).

13. A system according to any of claims 10 to 12, wherein said luminaires (106) are configured to transmit said activity reports (1011) to said occupancy analyzer (204, 304) through at least one of:
- wireless mesh network where said luminaires (106) are configured to act as nodes,
- lighting control network through which said luminaires (106) are configured to exchange lighting control information with a centralized lighting controller.

14. A system according to any of claims 10 to 13, wherein said occupancy analyzer (204, 304) is configured to compile and transmit, as said occupancy information to said one or more user devices (205), workstation-specific occupancy indicators that reflect the occupancy of said workstations (101, 601, 602, 603, 604, 605, 606, 607, 608, 901, 902, 903) as concluded from said activity reports (1011).

15. A system according to claim 14, wherein said occupancy analyzer (204, 304) is configured to compile and transmit to said one or more user devices (205) said workstation-specific occupancy indicators in the form of a two- or three-dimensional workstation occupancy map.

16. A system according to any of claims 10 to 15, wherein the occupancy analyzer (204, 304) is configured to:
- collect and store history information (1012) indicative of past occupancy of said workstations (101, 601, 602, 603, 604, 605, 606, 607, 608, 901, 902, 903),
- compare said activity reports (1011) to said history information (1012),
- produce an occupancy estimate (1022) indicative of estimated future occupancy of at least some of said workstations (101, 601, 602, 603, 604, 605, 606, 607, 608, 901, 902, 903) at a later instant of time, and
- compile and transmit, as said occupancy information to said one or more user devices (205), information indicative of said occupancy estimate (1022).

17. A system according to claim 16, wherein said occupancy analyzer (204, 304) is configured to compile and transmit, as said occupancy information to said one or more user devices (205), an estimated state of occupancy of at least one of said workstations (101, 601, 602, 603, 604, 605, 606, 607, 608, 901, 902, 903) at said later instant of time.

18. A system according to claim 16 or 17, wherein said occupancy analyzer (204, 304) is configured to compile and transmit, as said occupancy information to said one or more user devices (205), a rush alert (1023) indicative of an estimated full occupancy of a significant majority of said workstations (101, 601, 602, 603, 604, 605, 606, 607, 608, 901, 902, 903).

19. A system according to any of claims 16 to 18, wherein said occupancy analyzer (204, 304) is configured to compile and transmit, as said occupancy information to said one or more user devices (205), behavior instructions (1024) indicating desired behavior of current and/or possible future users of said workstations (101, 601, 602, 603, 604, 605, 606, 607, 608, 901, 902, 903).

## Patentansprüche

1. Lichtsteuerungssystem für eine Arbeitsstation (101), umfassend:
- mindestens eine Leuchte (106), die dazu konfiguriert ist, die Arbeitsstation (101) zu beleuchten, und
- eine arbeitsstationsspezifische Lichtsteuerungsvorrichtung (202), spezifisch für die Arbeitsstation (101), wobei die arbeitsstationsspezifische Lichtsteuerungsvorrichtung (202) dazu konfiguriert ist, Lichtsteuerungsbefehle an die mindestens eine Leuchte (106) zu übermitteln, während Perioden, wenn eine Computervorrichtung (201) eines Benutzers lokal mit der Lichtsteuerungsvorrichtung (202) an der Arbeitsstation (101) gekoppelt ist;
wobei die arbeitsstationsspezifische Lichtsteuerungsvorrichtung (202) eine Vorrichtung ist, die dazu konfiguriert ist, betrieben zu werden als oder verbindbar zu sein mit einer Dockingstation (102), die an der Arbeitsstation (101) bereitgestellt ist, zum Verbinden der Computervorrichtung (201) des Benutzers mit weiteren elektronischen Geräten (104, 105) an der jeweiligen Arbeitsstation (101),
**dadurch gekennzeichnet, dass** die arbeitsstationsspezifische Lichtsteuerungsvorrichtung (202) dazu konfiguriert ist, Aktivitätsindikatoren zu detektieren, die indikativ für eine Computernutzung an der Arbeitsstation (101) sind, und Aktivitätsübertragungen zu der mindestens einen Leuchte (106) während der Perioden zu übertragen, wobei die Aktivitätsübertragungen indikativ sind für ein Ausmaß, zu dem die Computervorrichtung (201) des Benutzers in Übereinstimmung mit den Aktivitätsindikatoren verwendet wird,
wobei die mindestens eine Leuchte (106) eine oder mehrere jeweilige Leuchten-Kommunikationseinheiten (203, 303) umfasst, die dazu konfiguriert sind, die Aktivitätsübertragungen von der arbeitsstationsspezifischen Lichtsteuerungsvorrichtung (202) zu empfangen, und wobei das Lichtersteuerungssystem ferner einen Belegungsanalysator (204, 304) umfasst, der dazu konfiguriert ist, von der einen oder den mehreren jeweiligen Leuchten-Kommunikationseinheiten (203, 303), Aktivitätsberichte (1011) zu empfangen, die auf den Aktivitätsübertragungen basieren, die die mindestens eine Leuchte (106) von der arbeitsstationsspezifischen Lichtersteuerungsvorrichtung (202) empfangen hat, wobei der Belegungsanalysator (204, 304) auch konfiguriert ist zum Kompilieren und zum Übertragen von Belegungsinformationen an eine oder mehrere Benutzervorrichtungen (205), wobei die Belegungsinformationen mindestens auf den Aktivitätsberichten (1011) basieren und die Belegungsinformationen indikativ für die Verfügbarkeit der Arbeitsstation sind.

2. Lichtersteuerungssystem nach Anspruch 1, wobei die arbeitsstationsspezifische Lichtersteuerungsvorrichtung (202) ein externes Modul (107) ist, mit einem Konnektor zum Verbinden mit der Dockingstation (102) an der Arbeitsstation (101).

3. Lichtersteuerungssystem nach einem der Ansprüche 1 oder 2, wobei die arbeitsstationsspezifische Lichtersteuerungsvorrichtung (202) dazu konfiguriert ist, an die mindestens eine Leuchte (106) Wartungspakete zu übertragen, während Perioden, wenn die Aktivitätsindikatoren eine detektierte kontinuierliche Computernutzung an der Arbeitsstation (101) indizieren.

4. Lichtersteuerungssystem nach einem der Ansprüche 1 bis 3, wobei die arbeitsstationsspezifische Lichtersteuerungsvorrichtung (202) dazu konfiguriert ist, an die mindestens eine Leuchte (106) verschiedene Arten von Aktivitätsübertragungen zu übertragen, abhängig davon, ob die Aktivitätsindikatoren nur eine Verbindung der Computervorrichtung (201) mit der Dockingstation (102) oder eine Verbindung und aktive Nutzung der Computervorrichtung (201) indizieren.

5. Lichtersteuerungssystem nach einem der Ansprüche 1 bis 4, wobei die arbeitsstationsspezifische Lichtersteuerungsvorrichtung (202) dazu konfiguriert ist, die Aktivitätsübertragungen zu übertragen, in Antwort auf Anweisungen, die sie von der Computervorrichtung (201) empfängt, die mit der Dockingstation (102) verbunden ist.

6. Lichtersteuerungssystem nach einem der vorhergehenden Ansprüche, wobei:
- der Belegungsanalysator (204, 304) dazu konfiguriert, als die Belegungsinformation an die eine oder mehreren Benutzervorrichtungen (205) arbeitsstationsspezifischer Belegungsindikatoren, die die Belegung der Arbeitsstation (101) reflektieren, wie geschlussfolgert aus den Aktivitätsberichten (1011), zu kompilieren und zu übertragen.

7. Lichtersteuerungssystem nach einem der vorhergehenden Ansprüche, wobei der Belegungsanalysator (204, 304) dazu konfiguriert ist:
- historische Informationen (1012) zu sammeln und zu speichern, die indikativ für eine vergangene Belegung der Arbeitsstation (101) sind,
- die Aktivitätsberichte (1011) mit den historischen Informationen (1012) zu vergleichen,
- eine Belegungsschätzung (1022) zu produzieren, die indikativ für eine geschätzte zukünftige Belegung der Arbeitsstation (101) zu einem späteren Zeitpunkt ist, und
- als die Belegungsinformation an die eine oder mehreren Benutzervorrichtungen (205), Informationen zu kompilieren und zu übertragen, die indikativ für die Belegungsschätzung (1022) sind.

8. Lichtersteuerungssystem nach Anspruch 7, wobei der Belegungsanalysator (204, 304) dazu konfiguriert ist, als die Information, die indikativ für die Belegungsschätzung (1022) ist, an die eine oder mehreren Benutzervorrichtungen (205) einen geschätzten Belegungszustand der Arbeitsstation (101) zu dem späteren Zeitpunkt zu kompilieren und zu übertragen.

9. Lichtersteuerungssystem nach einem der vorhergehenden Ansprüche, ferner umfassend die weiteren elektronischen Geräte (104, 105) an der jeweiligen Arbeitsstation (101), wobei die weiteren elektronischen Geräte (104, 105) eine Benutzeroberflächenvorrichtung (104) umfassen, die dazu konfiguriert ist, einen Verfügbarkeitsindikator anzuzeigen,
wobei der Verfügbarkeitsindikator mindestens einen aus:
- einem Indikator, ob die Arbeitsstation (101) verfügbar ist oder nicht, basierend auf vorhergehenden Aktivitätsindikatoren, die von der arbeitsstationsspezifischen Lichtsteuerungsvorrichtung (202) empfangen sind,
- einem Indikator einer Zeitdauer, die abgelaufen ist, seit die letzte Computernutzung an der Arbeitsstation (101) detektiert wurde, basierend auf vorhergehenden Aktivitätsindikatoren, die von der arbeitsstationsspezifischen Lichtsteuerungsvorrichtung (202) empfangen sind,
- einem Indikator einer geschätzten Zeit, nach der die Arbeitsstation (101) verfügbar ist, basierend auf vorhergehenden Aktivitätsindikatoren, die von der arbeitsstationsspezifischen Lichtsteuerungsvorrichtung (202) empfangen sind, und auf einer vorbestimmten Verfügbarkeitsregel (1016),
umfasst.

10. System zum Bestimmen einer Belegung an einer Mehrzahl von Arbeitsstationen (101, 601, 602, 603, 604, 605, 606, 607, 608, 901, 902, 903), umfassend:
- eine Mehrzahl von arbeitsstationsspezifischen Lichtsteuerungsvorrichtung (202),
- eine Mehrzahl von Leuchten (106), wobei jede dazu konfiguriert ist, mindestens eine Arbeitsstation (101, 601, 602, 603, 604, 605, 606, 607, 608, 901, 902, 903) zu beleuchten, wobei die Mehrzahl von arbeitsstationsspezifischen Lichtsteuerungsvorrichtungen (202) Vorrichtungen sind, die dazu konfiguriert sind, betrieben zu werden als oder verbindbar zu sein mit Dockingstationen (102), die an der Mehrzahl von Arbeitsstationen (101, 601, 602, 603, 604, 605, 606, 607, 608, 901, 902, 903) bereitgestellt sind, zum Verbinden einer Computervorrichtung (201) mit weiteren elektronischen Geräten (104, 105) an der jeweiligen Arbeitsstation (101, 601, 602, 603, 604, 605, 606, 607, 608, 901, 902, 903),
**dadurch gekennzeichnet, dass**:
jede der Mehrzahl von arbeitsstationsspezifischen Lichtsteuerungsvorrichtung (202) dazu konfiguriert ist, jeweilige Aktivitätsindikatoren zu detektieren, die indikativ für eine Computernutzung an einem jeweiligen einen der Mehrzahl von Arbeitsstationen (101, 601, 602, 603, 604, 605, 606, 607, 608, 901, 902, 903) sind, wobei jede der Mehrzahl von Leuchten (106) auch dazu konfiguriert ist, Aktivitätsübertragungen von einer der arbeitsstationsspezifischen Lichtsteuerungsvorrichtungen (202) zu empfangen, wobei die Aktivitätsübertragungen indikativ für Aktivitätsindikatoren sind, die von der jeweiligen arbeitsstationsspezifischen Lichtsteuerungsvorrichtung (202) detektiert wurden, wobei das
System ferner umfasst:
- einen Belegungsanalysator (204, 304), der dazu konfiguriert ist, von der Mehrzahl von Leuchten (106), Aktivitätsberichte (1011) zu empfangen, die auf den Aktivitätsübertragungen basieren, die die Mehrzahl von Leuchten (106) von der jeweiligen arbeitsstationsspezifischen Lichtsteuerungsvorrichtung (202) empfangen haben, wobei der Belegungsanalysator (204, 304) auch konfiguriert ist zum Kompilieren und zum Übertragen von Belegungsinformationen an eine oder mehrere Benutzervorrichtungen (205), wobei die Belegungsinformationen mindestens auf den Aktivitätsberichten (1011) basieren und die Belegungsinformationen indikativ für die Verfügbarkeit der Mehrzahl von Arbeitsstationen (101, 601, 602, 603, 604, 605, 606, 607, 608, 901, 902, 903) sind.

11. System nach Anspruch 10, wobei die arbeitsstationsspezifischen Lichtsteuerungsvorrichtungen (202) Dockingstationen (102) sind, die an den Arbeitsstationen bereitgestellt sind.

12. System nach Anspruch 10, wobei die arbeitsstationsspezifischen Lichtsteuerungsvorrichtungen (202) externe Module (107) sind, die verbunden sind mit jeweils einer der Dockingstationen (102), die an den Arbeitsstationen (101, 601, 602, 603, 604, 605, 606, 607, 608, 901, 902, 903) bereitgestellt sind.

13. System nach einem der Ansprüche 10 bis 12, wobei die Leuchten (106) dazu konfiguriert sind, die Aktivitätsberichte (1011) an den Belegungsanalysator (204, 304) zu übermitteln, über mindestens eines aus:
- einem drahtlosen Mesh-Netzwerk, in dem die Leuchten (106) dazu konfiguriert sind, als Knoten zu fungieren,
- einem Lichtsteuerungsnetzwerk, über das die Leuchten (106) dazu konfiguriert sind, Lichtsteuerungsinformationen mit einer zentralen Lichtsteuerung auszutauschen.

14. System nach einem der Ansprüche 10 bis 13, wobei der Belegungsanalysator (204, 304) dazu konfiguriert ist, als die Belegungsinformation an die eine oder mehreren Benutzervorrichtungen (205), arbeitsstationsspezifischer Belegungsindikatoren, die die Belegung der Arbeitsstationen (101, 601, 602, 603, 604, 605, 606, 607, 608, 901, 902, 903) reflektieren, wie geschlussfolgert aus den Aktivitätsberichten (1011), zu kompilieren und zu übertragen.

15. System nach Anspruch 14, wobei der Belegungsanalysator (204, 304) dazu konfiguriert ist, an die eine oder mehreren Benutzervorrichtungen (205) die arbeitsstationsspezifischen Belegungsindikatoren in der Form einer zwei- oder dreidimensionalen Arbeitsstationsbelegungskarte zu kompilieren und zu übertragen.

16. System nach einem der Ansprüche 10 bis 15, wobei der Belegungsanalysator (204, 304) dazu konfiguriert ist:
- historische Informationen (1012) zu sammeln und zu speichern, die indikativ für eine vergangene Belegung der Arbeitsstation (101, 601, 602, 603, 604, 605, 606, 607, 608, 901, 902, 903) sind,
- die Aktivitätsberichte (1011) mit den historischen Informationen (1012) zu vergleichen,
- eine Belegungsschätzung (1022) zu produzieren, die indikativ für eine geschätzte zukünftige Belegung der Arbeitsstation (101, 601, 602, 603, 604, 605, 606, 607, 608, 901, 902, 903) zu einem späteren Zeitpunkt ist, und
- als die Belegungsinformation an die eine oder mehreren Benutzervorrichtungen (205), Informationen, die indikativ für die Belegungsschätzung (1022) sind, zu kompilieren und zu übertragen.

17. System nach Anspruch 16, wobei der Belegungsanalysator (204, 304) dazu konfiguriert ist, als die Information an die eine oder mehrere Benutzervorrichtungen (205), einen geschätzten Belegungszustands von mindestens einem der Arbeitsstationen (101, 601, 602, 603, 604, 605, 606, 607, 608, 901, 902, 903) zu dem späteren Zeitpunkt zu kompilieren und zu übertragen.

18. System nach einem der Ansprüche 16 bis 17, wobei der Belegungsanalysator (204, 304) dazu konfiguriert ist, als die Belegungsinformationen an die eine oder mehreren Benutzervorrichtungen (205), einen Eilalarms (1023), der indikativ für eine geschätzte volle Belegung einer signifikanten Mehrheit der Arbeitsstationen (101, 601, 602, 603, 604, 605, 606, 607, 608, 901, 902, 903) ist, zu kompilieren und zu übertragen.

19. System nach einem der Ansprüche 16 bis 18, wobei der Belegungsanalysator (204, 304) dazu konfiguriert ist, als die Belegungsinformation an die eine oder mehreren Benutzervorrichtungen (205), Verhaltensanweisungen (1024), die indikativ für ein gewünschtes Verhalten der aktuellen und/oder möglichen zukünftigen Benutzer der Arbeitsstationen (101, 601, 602, 603, 604, 605, 606, 607, 608, 901, 902, 903) sind, zu kompilieren und zu übertragen.

## Revendications

1. Système de commande d'éclairage pour un poste de travail (101), comprenant :
- au moins un luminaire (106) configuré pour éclairer ledit poste de travail (101), et
- un dispositif (202) de commande d'éclairage spécifique au poste de travail qui est spécifique audit poste de travail (101), le dispositif (202) de commande d'éclairage spécifique au poste de travail étant configuré pour communiquer des instructions de commande d'éclairage audit au moins un luminaire (106) pendant des périodes lorsqu'un dispositif informatique (201) d'un utilisateur est localement couplé audit dispositif (202) de commande d'éclairage au niveau dudit poste de travail (101) ;
dans lequel ledit dispositif (202) de commande d'éclairage spécifique au poste de travail est un dispositif configuré pour un fonctionnement en tant que, ou pouvant être connecté à une station d'accueil (102) prévue au niveau dudit poste de travail (101) pour connecter ledit dispositif informatique (201) de l'utilisateur à un autre équipement électronique (104, 105) au niveau du poste de travail (101) respectif,
**caractérisé en ce que** le dispositif (202) de commande d'éclairage spécifique au poste de travail est configuré pour détecter des indications d'activité indicatives d'une utilisation d'ordinateur au niveau dudit poste de travail (101) et pour transmettre des transmissions d'activité audit au moins un luminaire (106) pendant lesdites périodes, lesdites transmissions d'activité étant indicatives d'une étendue dans laquelle ledit dispositif informatique (201) de l'utilisateur est utilisé en fonction desdites indications d'activité,
dans lequel ledit au moins un luminaire (106) comprend une ou plusieurs unités de communication (203, 303) de luminaire respectives configurées pour recevoir lesdites transmissions d'activité en provenance dudit dispositif (202) de commande d'éclairage spécifique au poste de travail,
et dans lequel le système de commande d'éclairage comprend en outre un analyseur d'occupation (204, 304), configuré pour recevoir, en provenance desdites une ou plusieurs unités de communication (203, 303) de luminaire respectives, des rapports d'activité (1011), sur la base desdites transmissions d'activité que l'au moins un luminaire (106) a reçues en provenance du dispositif (202) de commande d'éclairage spécifique au poste de travail, l'analyseur d'occupation (204, 304) étant également configuré pour compiler et transmettre des informations d'occupation à un ou plusieurs dispositifs (205) utilisateur, lesdites informations d'occupation étant basées sur au moins lesdits rapports d'activité (1011) et lesdites informations d'occupation étant indicatives de la disponibilité du poste de travail.

2. Système de commande d'éclairage selon la revendication 1, dans lequel ledit dispositif (202) de commande d'éclairage spécifique au poste de travail est un module externe (107) pourvu d'un connecteur pour connexion à ladite station d'accueil (102) au niveau dudit poste de travail (101).

3. Système de commande d'éclairage selon l'une quelconque des revendications 1 ou 2, dans lequel ledit dispositif (202) de commande d'éclairage spécifique au poste de travail est configuré pour transmettre audit au moins un luminaire (106) des paquets de maintenance pendant des périodes lorsque lesdites indications d'activité indiquent une utilisation d'ordinateur continue détectée au niveau du poste de travail (101).

4. Système de commande d'éclairage selon l'une quelconque des revendications 1 à 3, dans lequel ledit dispositif (202) de commande d'éclairage spécifique au poste de travail est configuré pour transmettre audit au moins un luminaire (106) une sorte différente de transmissions d'activité selon que lesdites indications d'activité indiquent seulement une connexion du dispositif informatique (201) à la station d'accueil (102) ou une connexion et une utilisation active dudit dispositif informatique (201).

5. Système de commande d'éclairage selon l'une quelconque des revendications 1 à 4, dans lequel ledit dispositif (202) de commande d'éclairage spécifique au poste de travail est configuré pour transmettre lesdites transmissions d'activité en réponse à des instructions qu'il reçoit en provenance du dispositif informatique (201) connecté à la station d'accueil (102).

6. Système de commande d'éclairage selon l'une quelconque des revendications précédentes, dans lequel :
- ledit analyseur d'occupation (204, 304) est configuré pour compiler et transmettre, en tant que lesdites informations d'occupation auxdits un ou plusieurs dispositifs (205) utilisateur, des indicateurs d'occupation spécifiques au poste de travail qui reflètent l'occupation dudit poste de travail (101) telle que conclue à partir desdits rapports d'activité (1011).

7. Système de commande d'éclairage selon l'une quelconque des revendications précédentes, dans lequel l'analyseur d'occupation (204, 304) est configuré pour :
- collecter et stocker des informations d'historique (1012) indicatives d'une occupation antérieure dudit poste de travail (101),
- comparer lesdits rapports d'activité (1011) auxdites informations d'historique (1012),
- produire une estimation d'occupation (1022) indicative d'une occupation future estimée dudit poste de travail (101) à un moment ultérieur, et
- compiler et transmettre, en tant que lesdites informations d'occupation auxdits un ou plusieurs dispositifs (205) utilisateur, des informations indicatives de ladite estimation d'occupation (1022).

8. Système de commande d'éclairage selon la revendication 7, dans lequel ledit analyseur d'occupation (204, 304) est configuré pour compiler et transmettre, en tant que lesdites informations indicatives de ladite estimation d'occupation (1022) auxdits un ou plusieurs dispositifs (205) utilisateur, un état d'occupation estimé dudit poste de travail (101) audit moment ultérieur.

9. Système de commande d'éclairage selon l'une quelconque des revendications précédentes, comprenant en outre ledit autre équipement électronique (104, 105) au niveau du poste de travail (101) respectif, dans lequel ledit autre équipement électronique (104, 105) comprend un dispositif (104) d'interface utilisateur configuré pour afficher un indicateur de disponibilité,
dans lequel ledit indicateur de disponibilité comprend au moins un indicateur parmi :
- un indicateur pour savoir si le poste de travail (101) est disponible ou non, sur la base d'indications d'activité précédentes reçues par le dispositif (202) de commande d'éclairage spécifique au poste de travail,
- un indicateur d'une durée de temps écoulée depuis la détection de la dernière utilisation d'ordinateur au niveau du poste de travail (101), sur la base d'indications d'activité précédentes reçues par le dispositif (202) de commande d'éclairage spécifique au poste de travail,
- un indicateur d'un temps estimé après lequel le poste de travail (101) est disponible, sur la base d'indications d'activité précédentes reçues par le dispositif (202) de commande d'éclairage spécifique au poste de travail et d'une règle de disponibilité (1016) prédéterminée.

10. Système de détermination d'occupation au niveau d'une pluralité de postes de travail (101, 601, 602, 603, 604, 605, 606, 607, 608, 901, 902, 903), comprenant :
- une pluralité de dispositifs (202) de commande d'éclairage spécifiques au poste de travail,
- une pluralité de luminaires (106), chacun configurés pour éclairer au moins un desdits postes de travail (101, 601, 602, 603, 604, 605, 606, 607, 608, 901, 902, 903),
dans lequel ladite pluralité de dispositifs (202) de commande d'éclairage spécifiques au poste de travail sont des dispositifs configurés pour un fonctionnement en tant que, ou pouvant être connectés à, des stations d'accueil (102) prévues au niveau de ladite pluralité de postes de travail (101, 601, 602, 603, 604, 605, 606, 607, 608, 901, 902, 903) pour connecter un dispositif informatique (201) à un autre équipement électronique (104, 105) au niveau du poste de travail (101, 601, 602, 603, 604, 605, 606, 607, 608, 901, 902, 903) respectif,
**caractérisé en ce que** :
chacun de la pluralité de dispositifs (202) de commande d'éclairage spécifiques au poste de travail est configuré pour détecter des indications d'activité respectives indicatives d'utilisation du dispositif informatique (201) au niveau d'un poste de travail respectif parmi ladite pluralité de postes de travail (101, 601, 602, 603, 604, 605, 606, 607, 608, 901, 902, 903),
chacun de la pluralité de luminaires (106) est également configuré pour recevoir des transmissions d'activité en provenance d'au moins un desdits dispositifs (202) de commande d'éclairage spécifiques au poste de travail, lesdites transmissions d'activité étant indicatives desdites indications d'activité détectées par les dispositifs (202) de commande d'éclairage spécifiques au poste de travail respectifs, le système comprenant en outre :
- un analyseur d'occupation (204, 304), configuré pour recevoir, en provenance de ladite pluralité de luminaires (106), des rapports d'activité (1011), sur la base desdites transmissions d'activité que la pluralité de luminaires (106) ont reçues en provenance des dispositifs (202) de commande d'éclairage spécifiques au poste de travail respectifs, l'analyseur d'occupation (204, 304) étant également configuré pour compiler et transmettre des informations d'occupation à un ou plusieurs dispositifs (205) utilisateur, lesdites informations d'occupation étant basées sur au moins lesdits rapports d'activité (1011) et lesdites informations d'occupation étant indicatives de la disponibilité de ladite pluralité de postes de travail (101, 601, 602, 603, 604, 605, 606, 607, 608, 901, 902, 903).

11. Système selon la revendication 10, dans lequel lesdits dispositifs (202) de commande d'éclairage spécifiques au poste de travail sont lesdites stations d'accueil (102) prévues au niveau desdits postes de travail.

12. Système selon la revendication 10, dans lequel lesdits dispositifs (202) de commande d'éclairage spécifiques au poste de travail sont des modules externes (107) connectés à des stations d'accueil respectives parmi lesdites stations d'accueil (102) prévues au niveau desdits postes de travail (101, 601, 602, 603, 604, 605, 606, 607, 608, 901, 902, 903).

13. Système selon l'une quelconque des revendications 10 à 12, dans lequel lesdits luminaires (106) sont configurés pour transmettre lesdits rapports d'activité (1011) audit analyseur d'occupation (204, 304) par le biais d'au moins un réseau parmi :
- un réseau maillé sans fil où lesdits luminaires (106) sont configurés pour servir de noeuds,
- un réseau de commande d'éclairage par le biais duquel lesdits luminaires (106) sont configurés pour échanger des informations de commande d'éclairage avec un dispositif de commande d'éclairage centralisé.

14. Système selon l'une quelconque des revendications 10 à 13, dans lequel ledit analyseur d'occupation (204, 304) est configuré pour compiler et transmettre, en tant que lesdites informations d'occupation auxdits un ou plusieurs dispositifs (205) utilisateur, des indicateurs d'occupation spécifiques au poste de travail qui reflètent l'occupation desdits postes de travail (101, 601, 602, 603, 604, 605, 606, 607, 608, 901, 902, 903) telle que conclue à partir desdits rapports d'activité (1011).

15. Système selon la revendication 14, dans lequel ledit analyseur d'occupation (204, 304) est configuré pour compiler et transmettre auxdits un ou plusieurs dispositifs (205) utilisateur lesdits indicateurs d'occupation spécifiques au poste de travail sous la forme d'une carte d'occupation de poste de travail en deux ou trois dimensions.

16. Système selon l'une quelconque des revendications 10 à 15, dans lequel l'analyseur d'occupation (204, 304) est configuré pour :
- collecter et stocker des informations d'historique (1012) indicatives d'une occupation antérieure desdits postes de travail (101, 601, 602, 603, 604, 605, 606, 607, 608, 901, 902, 903),
- comparer lesdits rapports d'activité (1011) auxdites informations d'historique (1012),
- produire une estimation d'occupation (1022) indicative d'une occupation future estimée d'au moins certains desdits postes de travail (101, 601, 602, 603, 604, 605, 606, 607, 608, 901, 902, 903) à un moment ultérieur, et
- compiler et transmettre, en tant que lesdites informations d'occupation auxdits un ou plusieurs dispositifs (205) utilisateur, des informations indicatives de ladite estimation d'occupation (1022).

17. Système selon la revendication 16, dans lequel ledit analyseur d'occupation (204, 304) est configuré pour compiler et transmettre, en tant que lesdites informations d'occupation auxdits un ou plusieurs dispositifs (205) utilisateur, un état d'occupation estimé du au moins un desdits postes de travail (101, 601, 602, 603, 604, 605, 606, 607, 608, 901, 902, 903) audit moment ultérieur.

18. Système selon la revendication 16 ou la revendication 17, dans lequel ledit analyseur d'occupation (204, 304) est configuré pour compiler et transmettre, en tant que lesdites informations d'occupation auxdits un ou plusieurs dispositifs (205) utilisateur, une alerte de rush (1023) indicative d'une occupation totale estimée d'une majorité importante desdits postes de travail (101, 601, 602, 603, 604, 605, 606, 607, 608, 901, 902, 903).

19. Système selon l'une quelconque des revendications 16 à 18, dans lequel ledit analyseur d'occupation (204, 304) est configuré pour compiler et transmettre, en tant que lesdites informations d'occupation auxdits un ou plusieurs dispositifs (205) utilisateur, des instructions de comportement (1024) indicatives d'un comportement souhaité d'utilisateurs actuels et/ou de futurs utilisateurs possibles desdits postes de travail (101, 601, 602, 603, 604, 605, 606, 607, 608, 901, 902, 903).
